# EUROPEAN PATENT SPECIFICATION

(11) **EP 2 913 979 B1**
(45) Date of publication and mention of the grant of the patent: **03.07.2019**
(21) Application number: 14157085.3
(22) Date of filing: 27.02.2014
(51) Int. Cl.: H04L 29/08, H04L 12/751, H04L 12/725

(54) **A method and system to process traffic optimization requests**
Verfahren und System zur Verarbeitung von Verkehrsoptimierungsanfragen
Procédé et système de traitement des demandes d'optimisation de trafic

(43) Date of publication of application: 02.09.2015
(73) Proprietor: Alcatel Lucent, 91620 Nozay (FR)
(72) Inventor: Randriamasy, Claire, Sabine, 91620 Nozay (FR); Lafragette, Jean-Luc, 91620 Nozay (FR)
(74) Representative: Nokia EPO representatives

(56) References cited:
- WO-A1-2012/138817
- US-A1- 2011 258 257
- ALIMI R ET AL: "ALTO Protocol; draft-ietf-alto-protocol-13.txt", ALTO PROTOCOL; DRAFT-IETF-ALTO-PROTOCOL-13.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 September 2012 (2012-09-08), pages 1-76, XP015084269, [retrieved on 2012-09-08]
- STIEMERLING M ET AL: "ALTO Deployment Considerations; draft-ietf-alto-deployments-06.txt", ALTO DEPLOYMENT CONSIDERATIONS; DRAFT-IETF-ALTO-DEPLOYMENTS-06.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 25 February 2013 (2013-02-25), pages 1-46, XP015092331, [retrieved on 2013-02-25]

## Description

### FIELD OF THE INVENTION

The present invention relates to the management of quality of experience of content delivery in communication network.

### BACKGROUND OF THE INVENTION

Complexity of communication networks transporting content to end users has risen for the last decades. The number of connected devices that consume content is growing rapidly whereas the architecture of communications networks is evolving to sustain the increased demand of connectivity and data. Such evolution of networks is usually disparate amongst sub-networks due to the meshed access or transport technologies or different providers that coexist in large heterogeneous communication networks.

In parallel, content consumption is also evolving in function of the expectation of the end users. Content delivery services must be adapted to provide content on time, anywhere and with quality. The Quality of Experience (QoE) is an indicator that quantifies how satisfactory should be an end user's experience compared to expectation from said user. If a content delivery service is unable to distribute content in a timely manner, for example a streamed video with unexpected buffering wait states on end user's device, the QoE is considered to be degraded.

In order to guarantee optimum content delivery, it is frequent that content to be delivered is duplicated on several nodes from a communication network. Said duplication may be done on purpose by the delivery services, in order to reduce access time with geographical dissemination of content, or it can be done by nodes of communication network that caches the data that are often requested.

Given the complexity of the communication networks and the demanding content delivery services, it becomes crucial to efficiently route content to its destination point. When a requested content is duplicated or available from multiple locations, a factor to ensure a proper QoE is to select the appropriate location for said requested content to be transported to the end user. Said selection is not only a matter of proximity but has to consider multiple factors. A nearby content server to an end user may suffer from data congestion at the moment an application from the end user has issued a content request, hence a farther content server may be more suitable to deliver the requested content.

It is also important to note that in a practical way, it is not economically possible to guarantee the best QoE to the end user, as it would require increased cost for all the parties involved in the delivery of the content. A tradeoff between a reasonable QoE and its associated costs to deliver content has to be found.

Traffic optimization protocols have been elaborated on top of transport protocols to address challenges of optimized QoE with respect to costs to convey data between two endpoints. The transport protocol Application-Layer Traffic Optimization (ALTO) from the Internet Engineering Task Force (IETF) has been designed to address some of the concerns described herein above. A draft technical document of IETF describes ALTO protocol as:
- "The Application-Layer Traffic Optimization (ALTO) Service provides network information (e.g., basic network location structure and preferences of network paths) with the goal of modifying network resource consumption patterns while maintaining or improving application performance. The basic information of ALTO is based on abstract maps of a network. These maps provide a simplified view, yet enough information about a network for applications to effectively utilize them."

The ALTO protocol uses a client-server scheme, wherein upon a content request from an application from an end user's device, a client requests the server to return some selected information related, among other things, to network locations (usually designating endpoints of content to be delivered), to end user's location, or provider defined cost on part of the network. The collected information are then processed to decide of a network location for the retrieval of the content and eventually the path to be followed. Such processing is not in the scope of the ALTO client/server scheme. For example it may be performed by a specific function collocated with the ALTO client. For example document XP015084269 discloses the ALTO protocol.

Problem that arises is that it may be not practical to handle such processing into an end user's device in which computing resources may be limited. It could occur also that some existing devices are not adapted to such processing tasks. It may also not be suitable to perform such processing in an intermediate network element such as a DNS server, which could be already intensively solicited for its primary functions or that could be not upgradable to support extra task to be performed. Application in end user systems, in particular mobile phones and tablets should have the guarantee that they can always invoke traffic optimization services without consuming limited resources in constrained networks such as wireless networks.

It is then needed to offer means for accessing traffic optimization services in a ubiquitous manner, and adapted to any kind of requester, in any kind of network deployment scheme.

### SUMMARY OF THE INVENTION

The invention aims to remedy all or some of the disadvantages of the above identified prior art. It particularly proposes ways for processing traffic optimization requests.

A first aspect of the invention relates then to a system according to Claim 1.

Thus, thanks to these features, the system offers the request handling client, the request handling service and the request link for processing service request for content T. Said processing allows the application endpoint gathering function to obtain the result of a traffic optimization request generated from the service request for content. Advantageously the request handling client is accessible from any kind of application endpoint gathering function. The system is a flexible solution that adapts to various deployment cases and offers means to generically process service requests.

According to various embodiments, such system comprises one or more of the features below, which should be considered in any possible technical combinations:
- the traffic optimization request further comprises a traffic optimization service identifier, said traffic optimization identifiers identifies an application endpoint ranking service, or an application path ranking service, or an application endpoint evaluation service.
- the system further comprises a request handling database, said request handling database comprising previous traffic optimization requests received by the request handling service and the previous results of the traffic optimization requests received by the traffic optimization agent, and said traffic optimization agent is adapted to interrogate the request handling database in order to find a matching previous request with the newly received traffic optimization request.
- the request handling client is comprised in the application endpoint gathering function.
- the application endpoint gathering function is an application endpoint gathering function client comprised in a user's device.
- the application endpoint gathering function is an application endpoint gathering function server AF2 comprised in a network element from the communication network.
- the protocol used by the traffic optimization server and the traffic optimization client is the Application-Layer Traffic Optimization "ALTO" protocol from the Internet Engineering Task Force "IETF", and wherein the traffic optimization server is an "ALTO" server and the traffic optimization client is an "ALTO" client.
- the request handling client is a multi-access and cost ALTO request client and the request handling service is multi-access and cost ALTO request service, said multi-access and cost ALTO request service and the request handling database being comprised in the traffic optimization frontend, said traffic optimization frontend being a multi-access and cost ALTO client, which further comprises the ALTO client and the traffic optimization agent as an ALTO agent.
- the traffic optimization request received by the request handling service is further processed by a metric selection module that selects ALTO metrics related to the characteristics of the application endpoints from the list of application endpoints and to the characteristics of the traffic optimization service identifier.
- the result of the traffic optimization request received by the ALTO client is further processed by a multi-criteria endpoint evaluation module comprised in the multi-access and cost ALTO client, said multi-criteria endpoint evaluation module being adapted to rank or evaluate the endpoints according to the result of the traffic optimization request.

Thus, thanks to these features, the system offers means to cooperate with a traffic optimization frontend and a traffic optimization server. The system advantageously allows offloading processing burden of traffic optimization request from existing network equipments or end user's device.

The system offers the request handling client and the request handling service to process service request for content, in cooperation with the ALTO server. Advantageously the system offers a ubiquitous access to ALTO functionalities.

A second aspect of the invention relates to a method according to Claim 11.

Thus, thanks to these features, the method enables the processing of service request for content. Said method is adapted to cover various use cases that depends on the topology of the communication network or to the characteristics of end user's device.

According to various embodiments, such system comprises one or more of the features below, which should be considered in any possible technical combinations:
- the traffic optimization request further comprises a traffic optimization service identifier, said traffic optimization service identifier identifies an application endpoint ranking service, or an application path ranking service, or an application endpoint evaluation service.
- The method further comprises the following steps performed by a traffic optimization agent:
   ∘ interrogating the request handling database in order to find a matching previous traffic optimization request with the newly received traffic optimization request,
   ∘ if a match between a previous traffic optimization request and the newly received traffic optimization request is found, receiving the previous result of the traffic optimization request from the request handling database.

### BRIEF DESCRIPTION OF THE FIGURES

Some embodiments of the present invention are now described, by way of example only, and with reference to the accompanying drawings, in which:
- FIG. 1 is a schematic block diagram of a system to process service request for a content,
- FIG. 2 is another schematic block diagram of a system to process service request for a content,
- FIG. 3 is another schematic block diagram of a system to process service request for a content,
- FIG. 4 is a schematic block diagram of a request handling client and a request handling service,
- FIG. 5 is a flowchart showing steps of a method to process a service request for a content.

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

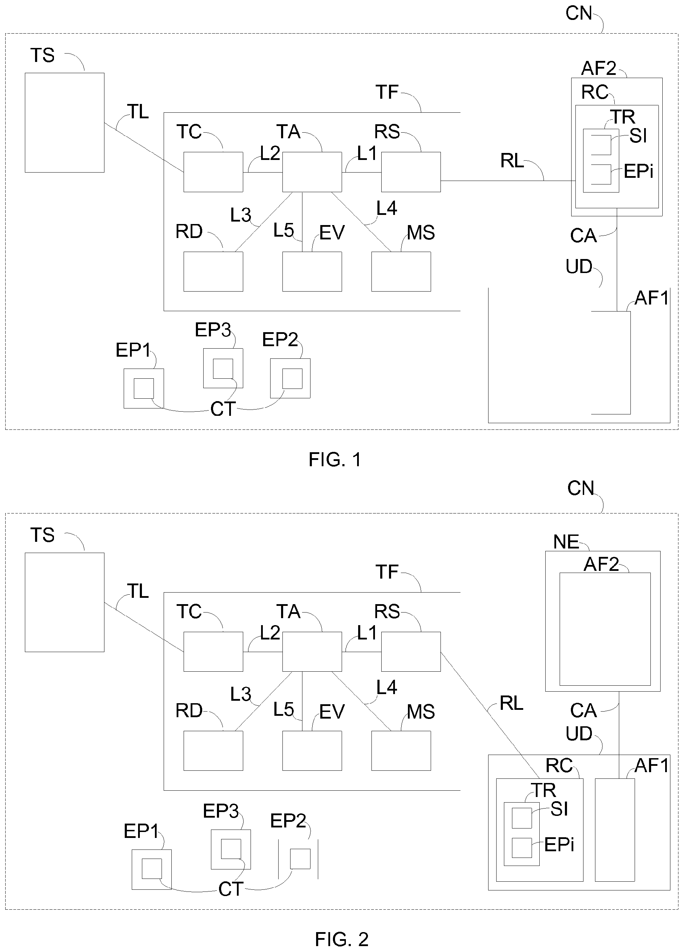

Referring to figure **FIG. 1****,** a schematic block diagram of a system to process service request for a content is depicted.

In this embodiment, a communication network CN comprises:
- a user's device UD that is hosting an application endpoint gathering function client AF1,
- an application endpoint gathering function server AF2,
- a connection CA, linking application endpoint gathering function client AFC and the application endpoint gathering function server AF1,
- a first endpoint EP1, a second endpoint EP2, a third endpoint EP3, each endpoint designating a location in the communication network CN where a content CT is available.

The user's device UD may be any kind of equipment operated by a user such as a smartphone, a tablet, an intelligent watch, a laptop, a desktop computer in non limiting examples. Such user's device UD is adapted to host application that may be any kind of software or hardware or combination of software/hardware module that consumes data or content, such as content CT, originated from some places of the communication network CN. Usually the consumption of data or content is initiated by the user operating the user's device UD, for example to watch a streamed video on an application such as a video client, or to consult sports results on a sports news client. In some cases, the consumption of data or content may be autonomously done by applications hosted on user's device UD. In non limiting examples, if a background application is an email client configured to automatically retrieved emails from a server, data will be requested by said email application on a regular basis, without action from the user. In another non limiting example content CT designates processing resources or virtualized functions and services available on demand.

It should also be noted that following embodiments are not limited to the user's device UD. Said embodiments can be arranged with a node from the communication network CN, said node relaying a request for content CT or requesting itself content CT. In a non limiting example, a broadcast service hosted on a broadcast node from communication network CN may replace user's device UD.

When an application hosted on user's device UD needs data or content CT stored at an unknown location, it issues a service request. Said service request is processed by the application endpoint gathering function client AFC hosted on the user's device. The purpose of the application endpoint gathering function AFi, such as the application endpoint gathering function server AF2 or the application endpoint gathering function client AF1 is to retrieve locations of data or content CT. In a non limiting example, the application endpoint gathering function client AF1 is able to retrieve by itself the locations of content CT. In another non limiting example, the function to gather the application endpoints locating content CT is distributed between the application endpoint gathering function client AF1 and the application gathering function server AF2. In yet another non limiting example, a user's device, not comprising an application endpoint gathering function client, interacts with the application endpoint gathering function server AF2 for identifying the location of content CT.

In a non limiting example, the application endpoint gathering function client AF1 is a software service executed by the user's device UD. In another non limiting example, the application endpoint gathering function client AF1 is comprised in the application that requests content CT.

The application endpoint gathering functions AFi processes request for content CT and searches for the locations of said content CT. Such processing is well-known from the prior-art. In non limiting examples, the application endpoint gathering function server AF2 is a Domain Name Service DNS server cooperating with the application endpoint gathering function client AF1 which is a DNS client. The application endpoint gathering function server may also be comprised in an entity managing a Distributed Hash Table (DHT) in another non limiting example. In yet other non limiting examples, the application endpoint gathering functions AFi are functions such as the physical resources selector of a virtual application orchestrator, or a peer tracker, a Content Data Network (CDN) delivery point tracker etc.

The content CT is located in three different places, considered as three possible endpoints, the first endpoint EP1, the second endpoint EP2 and the third endpoint EP3, and said endpoints forming a list of endpoints EPi. The application endpoint gathering function server AF1 establishes then a list of endpoints EPi comprising the said three endpoints EP1, EP2 and EP3. In a non limiting example, the identified endpoints are geographically distant, making the latency for the content CT to be retrieved varying from an endpoint to another. In another non limiting example, the first endpoint EP1 is located on a premium server cabled with high capacity optical fiber switches but with higher cost of use compared to the second endpoint EP2 that is accessible through a slower broadband connection.

The communication network further comprises:
- a request handling client RC, comprised in the application endpoint gathering function server AF2,
- a traffic optimization frontend TF, that further comprises:
   ∘ a request handling service RS, interfaced with the request handling client RC through an request link RL,
   ∘ a traffic optimization agent TA,
   ∘ a first link L1 that connects the request handling service RS with the traffic optimization agent TA
   ∘ a traffic optimization client TC, interfaced with the traffic optimization agent TA through a second link L2,
   ∘ a request handling database RD, interfaced with the traffic optimization agent through a third link L3,
- a traffic optimization server TS, interfaced with the traffic optimization frontend through a traffic optimization link TL.

In this embodiment, the user's device sends a request for retrieval of content CT, that is translated into a service request from the application endpoint gathering function client AF1 to the application endpoint gathering function server AF2. The application endpoint gathering function server AF2 retrieves the possible locations of content CT, the first endpoint EP1, the second endpoint EP2, the third endpoint EP3, and forwards a service request for content CT and the list of application endpoints EPi to the request handling client RC. Indeed the possible locations of the content CT are known with the first endpoint EP1, the second endpoint EP2, the third endpoint EP3, but it is possible that not all of them are optimum endpoints for the content CT to be retrieved by the end user's device UD. The selection of the most relevant endpoint is then needed to optimize the traffic.

The application endpoint gathering function server AF2 conveys the list of endpoints (EP1; EP2; EP3), said endpoints designating locations where content CT is available, to the request handling client RC. Preferably the request handling client RC is comprised in the application endpoint gathering function server AF2, but it may be also arranged as a module from one of the entities listed herein above, said arrangement will be described in latter embodiments. The request handling client RC may be typically hooked to the application endpoint gathering function server AF2.

The request handling client RC receives the service request and the list of endpoints (EP1; EP2; EP3) and processes them to generate a traffic optimization request TR. The said traffic optimization request TR comprises a traffic optimization service identifier SI and the list of endpoints EPi. In non limiting examples, the traffic optimization service identifier SI identifies services or functions such as application endpoints ranking service, application paths ranking service, evaluation service for application endpoints or application paths. In another non limiting example, the traffic optimization request TR comprises also the source endpoint requesting content namely the user's device UD or other source endpoints to which content CT is to be delivered, said source endpoints could be a virtual application orchestration function or a CDN tracker etc.

It has to be noted it is made herein after references to application endpoints, but embodiments and examples also applies to application paths. Indeed in a non limiting example, a source endpoint and a destination endpoint may define one or more application paths, each of said application paths may be different in terms of latency or cost for transporting content CT.

The request handling client RC sends to the traffic optimization frontend TF the traffic optimization request TR through the request link RL. Said request link RL enables the request handling client RC to deliver the traffic optimization request TR to the request handling service RS that is comprised in the traffic optimization frontend TF. For instance, the traffic optimization request TR is a request for providing a ranked list of endpoints (EP1; EP2; EP3) and the traffic optimization service identifier SI designates the application endpoint ranking service.

The traffic optimization frontend TF is a functional block that may be a standalone entity, or that may be comprised in another equipment such as a node from the Internet Service Provider that operates a portion of the communication network CN. In non limiting examples the traffic optimization frontend TF is made of software instantiation of services from a virtual application server, or is a dedicated processing node from the communication network CN.

The request link RL bridges the request client RC with the request handling service RS by the intermediate of the traffic optimization frontend TF. Considering the functions fulfilled by the request handling client RC, namely the generation of the traffic optimization request TR, the request link RL is advantageously a light interface for carrying small amounts of information. It may be for example an Internet Protocol IP socket carrying a simple data structure comprising the list of endpoints (EP1; EP2; EP3), the traffic optimization service identifier SI and the source endpoint.

The request handling service RS comprised in the traffic optimization frontend TF receives the traffic optimization request TR. Said request handling service RS is a function of said frontend, and is in non limiting example a software module hosted by the traffic optimization frontend TF. The request handling service RS further processes the received traffic optimization request TR from the request handling client RC. The request handling service RS sends then said processed traffic optimization request TR to the traffic optimization agent TA.

The traffic optimization agent TA is a function comprised in the traffic optimization frontend TF. It acts a central point for the traffic optimization frontend TF. It may be for example a software module hosted by the traffic optimization frontend TF. It received the traffic optimization request TR from the request handling service RS, through the first link L1.

The traffic optimization request TR is further processed by the traffic optimization agent TA that identifies metrics related to the received request. Such metrics are useful for the optimization of the traffic that may convey from one of the endpoints (EP1; EP2; EP3) the content CT to the user's device UD in a non limiting example. The selected metrics are embedded into the traffic optimization request TR for the further processing of the said request. In non limiting examples, the metrics are selected amongst cost metrics, or policy metrics, or QoE metrics, which can be used to evaluate a ratio of QoE over expenses for content transiting from its current location to the user's device UD. The traffic optimization agent TA formats the traffic optimization request TR with selected metrics, and provides said formatted traffic optimization request TR to the traffic optimization client TC, through the second link L2.

The traffic optimization client TC is also a function comprised in the traffic optimization frontend TF. In a non limiting example it is a software module hosted by the system that comprises the traffic optimization frontend TF. The traffic optimization client is in charge of adapting if needed the processed traffic optimization request TR. Once adapted, if needed, the traffic optimization client TC sends to the traffic optimization server TS, the traffic optimization request TR, said request comprising the selected metrics by the traffic optimization agent TA.

The traffic optimization server TS is providing services for evaluating metrics related to application endpoints and/or application paths. It comprises information related to the topology of the communication networks CN or parts of it. The traffic optimization server TS may comprise for example a map of costs of possible paths in a portion of the communication networks CN. Said map could be configured by a service provider, either the operator of the communication network, or the content provider. The traffic optimization server TS may also comprises functionalities to discover and update a map representative of a part of the communication network CN. In another non limiting example, the transport nodes of the communication network CN may provide to the traffic optimization server TS information related to their current status such as their congestion state or their latency with respect to another neighboring transport node.

The traffic optimization server TS processes the received traffic optimization request TR, which comprises metrics selected by the traffic optimization agent TA. The Traffic optimization server TS evaluates the metrics associated to each endpoints (EP1; EP2; EP3). In a non limiting example, the traffic optimization server TS retrieves from the map of costs, the costs of content CT transiting from the first endpoint EP1 to the user's device UD, the costs of content CT transiting from the second endpoint EP2 to the user's device UD, and the costs of content CT being conveyed from the third endpoint EP3 to the user's device UD. In another non limiting example, additionally to the costs associated with each endpoint, the traffic optimization server TS evaluates transport values such as the cumulated latency of the content CT to be transported from each endpoints to source endpoint of the service request for content CT. The information, such as costs values and/or transport values, gathered by the traffic optimization server TS upon the initial service request, are formatted into a result of the traffic optimization request TR. Said result of the traffic optimization request TR is then returned to its originating point.

The traffic optimization server TS sends to the traffic optimization client TC, the result of the traffic optimization request TR. In a non limiting example said result is conveyed in a message carried out on the traffic optimization link TL.

The traffic optimization client TC forwards the received result of the traffic optimization request TR to the traffic optimization agent TA.

The traffic optimization agent TA receives the result of the traffic optimization request TR. The traffic optimization agent TA processes the received result according to the traffic optimization service identifier SI. In a non limiting example, the traffic optimization service identifier SI identifies the application endpoint ranking service, so ranking of application endpoints is achieved according to the costs values or the transport values returned by the traffic optimization server TS, for each endpoint. The traffic optimization agent TA establishes a ranked list of endpoints, for example the initial unranked list of application endpoints is (EP1; EP2; EP3) and the ranked list is (EP2; EP3; EP1).

In another non limiting example, the traffic optimization service identifier SI identifies the application endpoint evaluation service, so the traffic optimization agent TA evaluates the costs values or the transports values returned by the traffic optimization server TS, for the content CT to be delivered from each endpoints. Said evaluated values of costs or transportation are included into the result of the traffic optimization request TR.

The traffic optimization agent TA sends the result of the traffic optimization request to the request handling service RS. In a non limiting example the traffic optimization agent TA may also sends along the ranked list, costs or transports values, either in their original format or either in a processed format that is used to perform the ranking of the endpoints.

The request handling service RS forwards the result of the traffic optimization request TR, and eventually other costs or transports values, to the request handling client RC, through the request link RL.

The request handling client RC communicates then the result of the traffic optimization request TR to the application endpoint gathering function server AF2.

In an embodiment, the application endpoint gathering function server AF2 sends the result of the traffic optimization request TR through the connection CA to the application endpoint gathering function client AF1 hosted on the user's device. The application endpoint gathering function client AP uses then the received result of the traffic optimization request TR according to the initial service request for content CT.

For example, the application endpoint gathering function client AF1 selects the most relevant endpoint from the ranked list (EP2; EP3; EP1) in order to retrieve content CT. In another non limiting example, the application endpoint gathering function client AF1 provides to the originator of the service request, such as an application hosted on user's device UD, the ranked list of endpoints (EP2; EP3; EP1). Said application is then in charge of selecting the most relevant endpoint amongst the ranked list (EP2; EP3; EP1) in order to get the content CT.

In another embodiment, the application endpoint gathering function client AF2 selects the most relevant endpoint that locates the content CT, and provides selected endpoint to the user's device UD.

In another embodiment, upon receiving a new traffic optimization request TR, the traffic optimization agent TA checks first if a similar request can be found in the request handling database RD. Said request handling database RD keeps records of past received traffic optimization requests. Such request handling database RD is advantageous when a content is often requested, in a case of a sport event for example, when lots of spectators request to watch the replay of a scoring in a match, or in a case where a content is going widely and fast spread due to interaction on social networks. If a previous similar request is found in the storage means of the request handling database RD, then the associated result of the traffic optimization request, also stored with the previous request, may be re-used by the traffic optimization agent TA, and said agent sends to the originating point of the service request the previous computed result.

In a non limiting example, if a previous request is found with respect to the newly received request for providing a ranked list of endpoints (EP1; EP2; EP3), the traffic optimization agent TA checks the validity of the ranking performed for the previous traffic optimization request corresponding to a request for the ranking of application endpoint service. By validity, it is meant for example that the traffic optimization agent TA verifies if the ranking is not too old. The request handling database RD for storing previous requests and associated results is advantageous for reducing the number of messages exchanged upon a service request for content CT and saves processing resources.

In an embodiment, the traffic optimization frontend TF further comprises:
- a metric selection module MS, interfaced with the traffic optimization agent TA through a fourth link L4,
- a multi-criteria endpoint evaluation module EV, interfaced with the traffic optimization agent TA through a fifth link L5.

When the traffic optimization agent TA receives from the request handling service RS a new traffic optimization request TR, or after having checked that this new request is not present in the request handling database RD, the traffic optimization agent TA interacts with the metric selection module MS. Said module is a function from the traffic optimization frontend TF, and is a software module in a non limiting example.

The metric selection module MS receives the traffic optimization request TR and analyzes it to select metrics such as costs values or QoE values that are relevant to the list of endpoints (EP1; EP2; EP3) and to the traffic optimization service identifier SI. Said selection takes into account the source point that requested the content CT to be retrieved. Additionally the metric selection module MS chooses weighting factors to be used by the identified traffic optimization service.

Once the traffic optimization agent TA receives from the traffic optimization client TC, the result of the traffic optimization request TR, processing of the result is performed. In an embodiment, said processing is computed by the multi-criteria evaluation module EV.

In a non limiting example, wherein the ranking of application endpoint service is selected, the multi-criteria evaluation module EV ranks the endpoints with the costs values and/or transport values received. Additionally said module takes into consideration for the ranking process, the weighting factors to be applied to the different values received with the result of the request for providing a ranked list of endpoints (EP1; EP2; EP3), said weighting factors were previously selected by the metric selection module MS. According to an example provided herein above, the output of the multi-criteria evaluation module EV is the ranked list of endpoints (EP2; EP1; EP3).

The metric selection module MS may also be adapted to refine the selection of metrics such as costs metrics, according to the result of the traffic optimization request TR. The metric selection module MS may also tune the weighting factors, or choose new weighting factors, in order to adapt the next processing to be performed by the multi-criteria evaluation module EV upon a new traffic optimization request TR.

In a non limiting example, the multi-criteria evaluation module EV and the metric selection module MS interacts with the traffic optimization agent TA by exchanging messages through respective fourth link L4 and fifth link L5. In another example, the multi-criteria evaluation module EV is adapted to receive directly from the traffic optimization client, the result of the traffic optimization request TR. In yet another limiting example, from an embodiment not depicted on figure FIG. 1, the multi-criteria evaluation module EV and the metric selection module MS interacts are adapted to interact together independently from the traffic optimization agent TA.

Referring to figure **FIG. 2****,** another schematic block diagram of a system to process service request for a content is depicted.

In this embodiment, the user's device UD further comprises the request handling client RC. Said request handling client cooperates with the application endpoint gathering function client AF1.

The application endpoint gathering function AF2 is comprised in a network element NE from the communication network. In a non limiting example the network element NE is an Internet Service Provider managed DNS server.

Upon a request for content CT, the application endpoint gathering function client AF1, through user's device UD, cooperates with the application endpoint gathering function server AF2 for retrieval of content CT. The application endpoint gathering function server AF2 identifies the endpoints (EP1; EP2; EP3) in which content CT is available, and sends back to application endpoint gathering function client AF1 the list of endpoints (EP1; EP2; EP3). The user's device UD interacts then with the request handling client RC and the application endpoint gathering function client AF1, in order for a service request for content CT to be processed by the request handling client RC. Said request handling client RC generates the traffic optimization request TR. Said traffic optimization request TR is then processed by the traffic optimization frontend TF, as described herein above. Subsequently the request handling service RS sends to the request handling client RC, located on the user's device UD, result of the traffic optimization request. The request handling client RC communicates to the application endpoint gathering function client AF1 the said received result.

In a non limiting example, the traffic optimization request TR is related to ranking of application endpoints, so the received result of said traffic optimization request TR comprises a ranked list of endpoints (EP2; EP3; EP1), so that an endpoint that provides the best compromise between QoE and overall cost for conveying the content CT to the user's device UD may be chosen either by the application endpoint gathering function client AF1 or the originator application of the service request to retrieve content CT.

In another non limiting example, the traffic optimization request TR is related to evaluate application paths, so the received result of said traffic optimization request TR comprises values related to each possible application paths between each application endpoints EPi and the user's device UD.

In another embodiment not depicted on figure FIG. 2, the request handling client RC is comprised in the application endpoint gathering function client AF1.

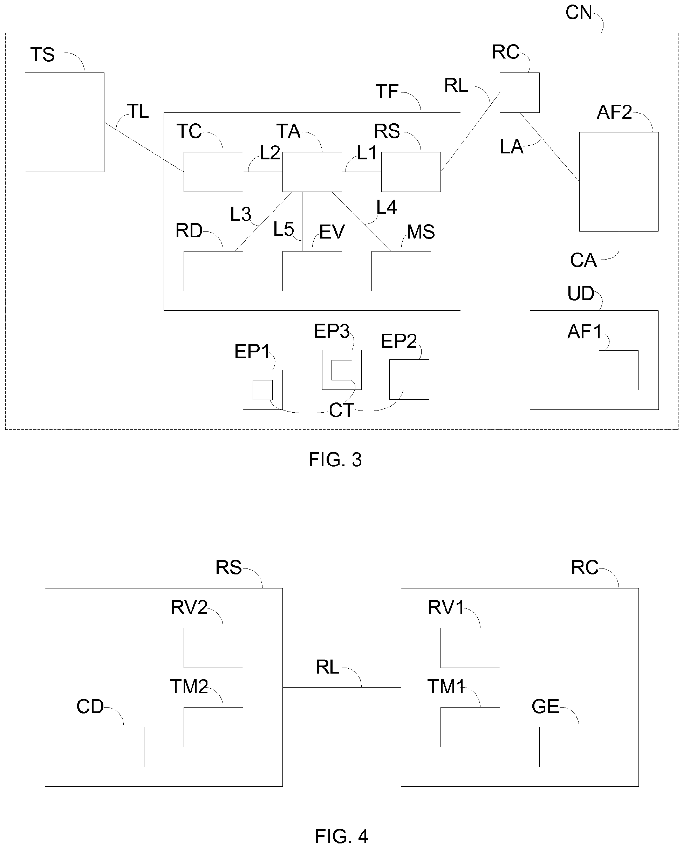

Referring to figure **FIG. 3****,** another schematic block diagram of a system to process service request for a content is depicted.

In this embodiment, the request handling client RC is a standalone module comprised in the communication network CN. It is interfaced with the application gathering function server AF2 through a communication link LA.

In a non limiting example, the request handling client RC is comprised in a node from the operator of the communication network CN. Such arrangement is advantageous for cases where the application endpoint gathering function server AF2 cannot fulfill the request handling client RC functionalities due to hardware or software limitations.

In another embodiment, not depicted on figure FIG. 3, the request handling client RC is a standalone module comprised in the communication network CN. It is interfaced with the application gathering function client AF1 through a dedicated communication link. Said application endpoint gathering function client AF1 is adapted to retrieve the location of the content CT.

In a non limiting example, the request handling client RC is comprised in a node from the operator of the communication network CN. Such arrangement is advantageous for cases where the application endpoint gathering function client AF1 is not cooperating with the application endpoint gathering function server AF2.

In another embodiment, the application endpoint gathering function AFi is a standalone application endpoint gathering function AF1 comprised in a user's device UD. In a non limiting example the said application endpoint gathering function AF1 is a Distributed Hash Table DHT.

In another embodiment, the application endpoint gathering function AFi is a standalone application endpoint gathering function AF2 comprised in a network element (NE) from the communication network (CN). In a non limiting example, the application endpoint gathering function AF2 is a Content Data Network (CDN) delivery point tracker, or virtual application orchestrator.

Referring to figure FIG. 4, a schematic block diagram of a request handling client and a request handling service is depicted.

In this embodiment, the request handling client RC comprises:
- a first receiver RV1,
- a first transmitter TM1,
- a generator GE.

The request handling service RS comprises:
- a second receiver RV2,
- second transmitter TM2,
- a computation device CD.

The first receiver R1 is adapted to receive service request for content CT and list of application endpoints EPi, incoming from application endpoint gathering functions AFi. Said first receiver RV1 is also adapted to receive messages sent by the request handling service RS, through the request link RL.

The first transmitter TM1 is adapted to transmit or send messages. Said first transmitter TM1 comprises means to send to the application endpoint gathering functions AFi, the result of the traffic optimization request TR. The first transmitter TM1 is also adapted to send through the request link RL to the request handling service RS, the traffic optimization request TR.

The request handling client RC also comprises the generator GE, a device adapted to generate the traffic optimization request TR according to a service request for content CT and the list of application endpoints EPi.

In non limiting examples, the first receiver RV1, the first transmitter TM1 and the generator GE are software modules from the request handling client RC, or are combination of software and hardware elements.

The second receiver RV2 from the request handling service RS is a device adapted to receive traffic optimization request TR from the request handling client RC through the request link RL. Said second receiver RV2 also comprises means for receiving messages from the traffic optimization agent TA, such as the result of the traffic optimization request TR.

The computation device CD is a device adapted to process received traffic optimization request TR. Said processing may be in a non limiting example an adaptation from a protocol to another protocol.

The second transmitter TM2 is adapted to send traffic optimization request TR or processed traffic optimization request TR to the traffic agent optimization TA, through the first link L1. The second transmitter TM2 is also adapted to send messages to the request handling client RC, through the request link RL.

In non limiting examples, the second receiver RV2, the second transmitter TM2 and the computation device CD are software modules from the request handling client RS, or are combination of software and hardware elements.

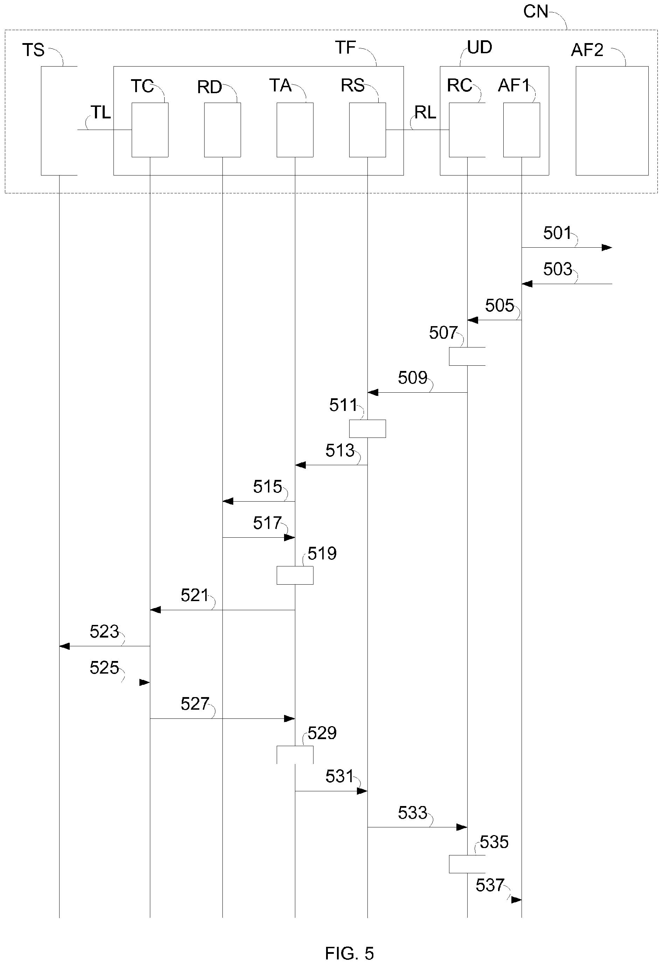

Referring to figure **FIG. 5****,** a flowchart showing steps of a method to process service request for a content is depicted.

In this embodiment, the user's device UD comprises the request handling client RC, similarly as an embodiment described herein above.

In a first step **501,** upon a service request for content CT, said service request is issued by user's device UD, the application endpoint gathering function client server AF1 interrogates the application endpoint client function client AF2, in order to get the possible locations of the content CT.

In a second step **503,** the application endpoint client function server AF2 sends to the application endpoint gathering function client AF1, the list of endpoints (EP1; EP2; EP3), wherein each endpoint designates a possible location that comprises the content CT.

In a third step **505,** the application endpoint gathering function client AF1 provides to the request handling client RC, a service request for content CT. Said service request is provided along with the list of endpoints (EP1; EP2; EP3). In an alternative embodiment, wherein the request handling client RC is not comprised in the user's device but is a standalone module, the application endpoint gathering function server AF2 provides to the request handling client RC the service request and the list of endpoints (EP1; EP2; EP3).

In a fourth step **507,** the request handling client RC processes the received service request and list of endpoints (EP1; EP2; EP3) and generates the traffic optimization request TR, said traffic optimization request TR comprising the list of application endpoints (EP1; EP2; EP3)and a traffic optimization service identifier SI. Additionally it may also comprise characteristics of the user's device UD. The traffic optimization request TR is a lightweight request to be conveniently conveyed through the request link RL.

In a fifth step **509,** the request handling client RC sends the traffic optimization request TR to the request handling service RS, through the request link RL. In a non limiting example the exchange between the request handling client RC and the request handling service RS is achieved through an Internet Protocol socket to carry simple data structure.

In a sixth step **511,** the request handling service RS processes the received traffic optimization request TR, said processing is performed to adapt said request to the specification of the traffic optimization agent TA.

In a seventh step **513,** the request handling service RS sends to the traffic optimization agent TA, the processed traffic optimization request TR.

In an optional eighth step **515,** the request handling service RS interrogates the request handling database RD in order to find a matching previous traffic optimization request with the newly received traffic optimization request TR. The request handling database RD checks in the storage of the former received requests, if a similar request can be found with respect to the newly received traffic optimization request TR.

In an optional ninth step **517,** if a match between a previous request and the newly received traffic optimization request TR is found, the request handling database RD sends to the traffic optimization agent TA the previous result associated with the previous traffic optimization request. In an embodiment not depicted on figure FIG. 5, the request handling service RS sends then to the request handling client RC the said previous result.

In a tenth step **519,** the traffic optimization agent TA processes the traffic optimization request TR to the traffic optimization client TC. In said processing, the traffic optimization agent TA identifies metrics related to the received traffic optimization request TR. These metrics are to be used by traffic optimization entities that will evaluate each endpoint with respect to the identified metrics. The processed traffic optimization request TR comprises then the identified metrics by the traffic optimization agent TA. Such metrics are costs metrics or policy metrics, all related to traffic management in non limiting examples. In a non limiting example the metric selection module MS is in charge of performing the identification and selection of metrics related to the traffic optimization service identifier SI.

In an eleventh step **521,** the traffic optimization agent TA sends the processed traffic optimization request TR to the traffic optimization client TC.

In a twelfth step not depicted on figure FIG. 5, the traffic optimization client TC analyzes the received traffic optimization request TR and formats said request according to a protocol used between the traffic optimization client TC and the traffic optimization server TS.

In a thirteenth step **523,** the traffic optimization client TC sends the formatted traffic optimization request TR to the traffic optimization server TS, through the traffic optimization link TL.

In a fourteenth step not depicted on figure FIG. 5, the traffic optimization server TS processes the formatted traffic optimization request TR. For each endpoint, the traffic optimization server TS evaluates related metrics. In a non limiting example, the traffic optimization server TS uses a costs map, wherein each endpoint and possible paths comprising this endpoint is associated with traffic costs. The traffic optimization server TS generates then the result of the traffic optimization request TR that comprises metrics values corresponding to the identified metrics by the traffic optimization agent TA.

In a fifteenth step **525,** the traffic optimization server TS sends to the traffic optimization client TC the result of the traffic optimization request TR.

In a sixteenth step **527,** the traffic optimization client TC sends the result of the traffic optimization request TR to the traffic optimization agent TA.

In a seventeenth step **529,** the traffic optimization agent TA processes the result of the traffic optimization request TR. Said processing depends on the traffic optimization service identifier SI associated with the initial service request. In a non limiting example said processing is the ranking of the endpoints according to the received result of the traffic optimization request TR. The ranking uses the metrics values provided by the traffic optimization server TS. In a non limiting example, a simple ranking of endpoints is computed based on cumulated cost, such as cost per megabyte to transport the content CT on each segment of data path between an endpoint and the application endpoint gathering function client AF1.

In another non limiting example, the traffic optimization agent TA cooperates with the multi-criteria endpoint evaluation module EV that processes the result of the traffic optimization request TR. Said multi-criteria endpoint evaluation module EV is adapted to perform the ranking of the endpoints (EP1; EP2; EP3) in a non limiting example.

In an eighteenth step **531,** the traffic optimization agent sends to the request handling service RS, the result of the traffic optimization request TR.

In a nineteenth step **533,** the request handling service RS sends the result of the traffic optimization request TR to the request handling client RC.

In a twentieth step **535,** the request handling client RC adapts the result of the traffic optimization request TR into the format used to exchange messages between the request handling client RC and the application endpoint gathering function client AF1. In a non limiting example, advantageously, the request handling client RC customize the result of the traffic optimization request so as to mimic the format of the information returned by the application endpoint gathering functions AFi in order that the operations of the request handling client RC or the request handling service RS are transparent to the user's device UD.

In a twenty-first step **537,** the request handling client RC provides to the application endpoint gathering function client AF1 the result of the traffic optimization request TR.

In a twenty-second step not depicted in the figure FIG. 5, the application gathering function client AF1 uses the said result of the traffic optimization request TR, in order to complete the service request for content CT.

In an embodiment, the protocol used by the traffic optimization server TS and the traffic optimization client TC is the Application-Layer Traffic Optimization "ALTO" protocol from the Internet Engineering Task Force "IETF".

In this embodiment, the traffic optimization client TC is an ALTO client, and the traffic optimization server TS is an ALTO server. The traffic optimization frontend TF is a multi-access and cost ALTO client that comprises:
- the ALTO client,
- an ALTO agent as the traffic optimization agent TA,
- a multi-access and cost ALTO request service as the request handling service RS.

In this embodiment, the request client RC is a multi-access and cost ALTO request client, and the request link RL is a multi-access and cost ALTO request service interface.

Additionally in another embodiment the multi-access and cost ALTO client may further comprises an ALTO information cache as the request handling database RD. It may also comprise an application metric and weight setting function as the metric selection module MS. The multi-access and cost ALTO client may also further comprise the multi-criteria endpoint evaluation module EV.

In an embodiment, the application endpoint gathering function AF2 is an Internet Service Provider managed DNS server that comprises the multi-access and cost ALTO request client. The application endpoint gathering function AF1 is comprised in a DNS client hosted on the user's device UD.

Upon a service request for content CT from the user's device UD, the DNS server receives a request from the DNS client. Said DNS server captures the possible location of the content CT according to a DNS resolver, said possible locations being gathered in the list of endpoints EPi. The multi-access and cost ALTO request client obtains the list of endpoints (EP1; EP2; EP3) from the application endpoint gathering function AF2, each endpoint corresponding to an Internet Protocol address gathered by the DNS resolver.

The multi-access and cost ALTO request client generates a traffic optimization request TR, for ranking endpoints (EP1; EP2; EP3), and sends said traffic optimization request TR to the multi-access and cost ALTO request service through the multi-access and cost ALTO request service interface.

The multi-access and cost ALTO request service receives the traffic optimization request TR for ranking endpoints (EP1; EP2; EP3) and adapts it to send it to the ALTO agent.

The ALTO agent interrogates the ALTO information cache that keep records of the received traffic optimization requests and the associated previous results ranked list of endpoints. Advantageously the ALTO information cache allows serving quickly the frequently repeated queries for the same content CT.

If the ALTO information cache is not able to find a matching previous request, the multi-access and cost ALTO request service further processes the traffic optimization request TR ranking list of endpoints EPi. In a non limiting example the application metric and weight setting function provides to the ALTO agent selected metrics that are chosen according to the endpoints and/or the user's device UD characteristics such as the kind of application that is requesting content CT. In this embodiment, the selected metrics are ALTO metrics.

The ALTO agent adapts then the traffic optimization request TR for ranking list of endpoints (EP1; EP2; EP3) that includes the selected ALTO metrics, and sends the adapted request to the ALTO client.

The ALTO client generates an ALTO request intended to the ALTO server, said ALTO request comprises the characteristics of the traffic optimization request TR.

Upon the reception of the ALTO request, the ALTO server identifies or computes ALTO metrics values, such as cost values extracted from a map of costs of endpoints known by the ALTO server. The ALTO server sends then the identified ALTO metrics values as a result of the traffic optimization request TR, in response to the ALTO request, to the ALTO client.

The ALTO client provides the ALTO metrics from the ALTO server to the ALTO agent. Said ALTO agent cooperates with the multi-criteria endpoint evaluation module EV that ranks the endpoints into the ranked list of endpoints (EP2; EP3; EP1) according to the ALTO metrics values, in a non limiting example.

The ALTO agent handles to the multi-access and cost ALTO request service the ranked list of endpoints (EP2; EP3; EP1). Said request service provides to the multi-access and cost ALTO request client said ranked list through the multi-access and cost ALTO request service interface.

The multi-access and cost ALTO request client may adapts the ranked list of endpoints (EP2; EP1; EP3) into a format suitable to the application endpoint gathering function server AF2, comprised in the DNS server.

The DNS server provides then the ranked list of endpoints (EP2; EP3; EP1) to the application endpoint gathering function client AF1 comprised in the DNS client hosted on the user's device UD. Said application endpoint gathering function client AF1 selects then the most relevant endpoints from the ranked list.

As exposed in the various embodiments, the present invention offers a request handling client RC that is able to interact with any kind of application endpoint gathering functions AFi. The request handling client RC is adapted to be located in either the network side in the application endpoint gathering function server AF1, or in the end user's side in the application endpoint gathering function client AF2.

The request service RS offers to connect the traffic optimization frontend TF with the request handling client RC independently of the location of said request handling client RC.

The request link RL defines a lightweight connection to convey small amounts but useful information to process service request for content CT

The system and method of the invention offer to cover various deployment or use cases, and are advantageous in nowadays communication network that are highly heterogeneous. The invention offers then a generic solution to process service requests for content, either being data or computational resources.

Moreover flexibility of the combination of the present features allows in some embodiments to process service request in a transparent way to the end user and/or to the application that initiate said service request for content CT. Indeed with the invention, it is no more needed to deploy a traffic optimization client on the user's end side.

In the case where the traffic optimization frontend TF is a standalone module, the request service comprised in said traffic optimization frontend TF advantageously allows to offload the burden of handling of traffic optimization requests from nodes from the communication network CN.

The invention offers a system that can be ubiquitously solicited, through lightweight access, for processing evaluation/ranking request on application paths or endpoints, sent from various devices or places.

It should be appreciated by those skilled in the art that any block diagrams herein represent conceptual views of illustrative circuitry embodying the principles of the invention. Similarly, it will be appreciated that any flow charts, and the like represent various processes which may be substantially represented in computer readable medium and so executed by a computer or processor, whether or not such computer or processor is explicitly shown.

In the claims, any reference signs placed between parentheses shall not be construed as limiting the scope of the claims.

## Claims

1. A system, for a communication network (CN) having a traffic optimization server (TS) and a traffic optimization client (TC) cooperating with each other to provide a traffic optimization service, for processing a service request for a content (CT) from an application endpoint gathering function (AFi), said application endpoint gathering function (AFi) being adapted to establish a list of application endpoints (EPi) designating different locations of the content (CT) within the communication network (CN), said system comprising a request handling client (RC) and a request handling service (RS) different from and additional to the traffic optimization server (TS) and the traffic optimization client (TC), wherein:
- the request handling client (RC) comprises:
∘ a first receiver (RV1) for receiving from the application endpoint gathering function (AFi), the service request for the content (CT) and the list of application endpoints (EPi) designating locations of content (CT),
∘ a generator (GE) for generating a traffic optimization request (TR) comprising the list of application endpoints (EPi) and a traffic optimization service identifier (SI),
∘ a first transmitter (TM1) for sending the generated traffic optimization request (TR) to the request handling service (RS) through a request link (RL) between the request handling client (RC) and the request handling service (RS), and,
- the request handling service (RS) comprises:
∘ a computing device (CD) adapted for processing the traffic optimization request (TR) received from the request handling client (RC), said processing adapting said traffic optimization request (TR) to a specification of a traffic optimization agent (TA) cooperating with the traffic optimization client (TC),
∘ a second transmitter (TM2) for sending the processed traffic optimization request (TR) to the traffic optimization agent (TA) cooperating with the traffic optimization client (TC),
∘ a second receiver (RV2) for receiving a result of processing of the traffic optimization request (TR) from the traffic optimization agent (TA), wherein said result is based on the processing of the traffic optimization request (TR) according to the traffic optimization service identifier (SI) by the traffic optimization agent (TA),
and wherein, further, in response to the service request for the content (CT):
∘ the second transmitter (TM2) is configured for sending the result of the processing of the traffic optimization request (TR) to the request handling client (RC), through the request link (RL), said result of the processing of the traffic optimization request (TR) comprising a ranked list of the application endpoints (EPi) based on transport and/or cost values returned by the traffic optimization server (TS),
∘ the first receiver (RV1) is configured for receiving the result of the processing of the traffic optimization request (TR) from the request handling service (RS) through the request link (RL), and,
∘ the first transmitter (TM1) is configured for providing the result of the processing of the traffic optimization request (TR) to the application endpoint client gathering function (AFi).

2. A system according to claim 1, wherein the traffic optimization identifier (SI) identifies an application endpoint ranking service, or an application path ranking service, or an application endpoint evaluation service.

3. A system according to any of the claims 1 and 2, wherein the system further comprises a request handling database (RD), said request handling database (RD) comprising previous traffic optimization requests (TR) received by the request handling service (RS) and the previous results of the traffic optimization requests (TR) received by the traffic optimization agent (TA), and said traffic optimization agent (TA) is adapted to interrogate the request handling database (RD) in order to find a matching previous request with the newly received traffic optimization request (TR).

4. A system according to any of the claims 1 to 3, wherein the request handling client (RC) is comprised in the application endpoint gathering function (AFi).

5. A system according to any of the claims 1 to 4, wherein the application endpoint gathering function (AFi) is an application endpoint gathering function client (AF1) comprised in a user's device (UD).

6. A system according to any of the claims 1 to 4, wherein the application endpoint gathering function (AFi) is an application endpoint gathering function server (AF2) comprised in a network element (NE) from the communication network (CN).

7. A system according to any of the claims 1 to 6, wherein the protocol used by the traffic optimization server (TS) and the traffic optimization client (TC) is the Application-Layer Traffic Optimization "ALTO" protocol from the Internet Engineering Task Force "IETF", and wherein the traffic optimization server (TS) is an "ALTO" server and the traffic optimization client (TC) is an "ALTO" client.

8. A system according to claim 7, wherein the request handling client (RC) is a multi-access and cost ALTO request client and the request handling service (RS) is multi-access and cost ALTO request service, said multi-access and cost ALTO request service and the request handling database (RD) being comprised in the traffic optimization frontend (TF), said traffic optimization frontend (TF) being a multi-access and cost ALTO client, which further comprises the ALTO client and the traffic optimization agent (TA) as an ALTO agent.

9. A system according to any of the claims 7 and 8, wherein the traffic optimization request (TR) received by the request handling service (RS) is further processed by a metric selection module (MS) that selects ALTO metrics related to the characteristics of the application endpoints (EPi) from the list of application endpoints (EPi) and to the characteristics of the traffic optimization service identifier (SI).

10. A system according to any of the claims 7 to 9, wherein the result of the traffic optimization request (TR) received by the ALTO client is further processed by a multi-criteria endpoint evaluation module (EV) comprised in the multi-access and cost ALTO client (TF), said multi-criteria endpoint evaluation module (EV) being adapted to rank or evaluate the endpoints according to the result of the traffic optimization request (TR).

11. A method, carried out in a communication network (CN) having a traffic optimization server (TS) and a traffic optimization client (TC) cooperating with each other, for processing a service request for content (CT), from an application endpoint gathering function (AFi), said application endpoint gathering function (AFi) is adapted to establish a list of application endpoints (EPi) designating locations of content (CT), and said method comprising the following steps performed, in response to the service request for content (CT), by a request handling client (RC) and a request handling service (RS) different from and additional to the traffic optimization server (TS) and the traffic optimization client (TC) of said communication network (CN):
- the request handling client (RC) receiving (505) from the application endpoint gathering function (AFi), the service request for content (CT) and a list of application endpoints (EPi) designating location of content (CT),
- the request handling client (RC) generating (507) a traffic optimization request (TR), said traffic optimization request (TR) comprising the list of application endpoints (EPi) and a traffic optimization service identifier (SI),
- the request handling client (RC) sending (509) to a request handling service (RS) the generated traffic optimization request (TR) through a request link (RL) between the request handling client (RC) and the request handling service (RS),
- the request handling service (RS) processing (511) the traffic optimization request (TR) received from the request handling client (RC), said processing adapting said traffic optimization request (TR) to a specification of a traffic optimization agent (TA) cooperating with the traffic optimization client (TC),
- the request handling service (RS) sending (513) the processed traffic optimization request (TR) to a traffic optimization agent (TA) cooperating with a traffic optimization client (TC),
- the request handling service (RS) receiving (531) a result of the processing of the traffic optimization request (TR) from the traffic optimization agent (TA), wherein said result is based on the processing of the traffic optimization request (TR) according to the traffic optimization service identifier (SI) by the traffic optimization agent (TA),
- the request handling service (RS) sending (533) the result of the processing of the traffic optimization request (TR) to the request handling client (RC), through the request link (RL), said result of the processing of the traffic optimization request (TR) comprising a ranked list of the application endpoints (EPi) based on transport and/or cost values returned by the traffic optimization server (TS),
- the request handling client (RC) receiving (533) from the request handling service (RS) through the request link (RL), the result of the processing of the traffic optimization request (TR), and,
- the request handling client (RC) providing (535) to the application endpoint client gathering function (AFi), the result of the processing of the traffic optimization request (TR).

12. A method according to the claim 11, wherein the traffic optimization request (TR) further comprises a traffic optimization service identifier (SI), said traffic optimization service identifier (SI) identifies an application endpoint ranking service, or an application path ranking service, or an application endpoint evaluation service.

13. A method according to any of the claims 11 and 12, wherein said method further comprises the following steps performed by a traffic optimization agent (TA):
- interrogating (515) the request handling database (RD) in order to find a matching previous traffic optimization request with the newly received traffic optimization request (TR),
- if a match between a previous traffic optimization request and the newly received traffic optimization request (TR) is found, receiving (517) the previous result of the traffic optimization request from the request handling database (RD).

## Patentansprüche

1. System für ein Kommunikationsnetzwerk (CN), das einen Verkehrsoptimierungsserver (TS) und einen Verkehrsoptimierungsclient (TC) aufweist, die miteinander kooperieren, um einen Verkehrsoptimierungsdienst bereitzustellen, um eine Dienstanfrage bezüglich eines Contents (CT) von einer Anwendungsendpunktsammelfunktion (AFi) zu bearbeiten, wobei die Anwendungsendpunktsammelfunktion (AFi) angepasst ist, um eine Liste der Anwendungsendpunkte (EPi) zu erstellen, die verschiedene Orte des Inhalts (CT) innerhalb des Kommunikationsnetzwerks (CN) bezeichnen, wobei das System einen Anfragebearbeitungsclient (RC) und einen Anfragebearbeitungsdienst (RS) aufweist, die sich von dem Verkehrsoptimierungsserver (TS) und dem Verkehrsoptimierungsclient (TC) unterscheiden und zusätzlich von diesen vorliegen, wobei:
- der Anfragebearbeitungsclient (RC) Folgendes aufweist:
∘ einen ersten Empfänger (RV1) zum Empfangen von der Anwendungsendpunktsammelfunktion (AFi) der Dienstanfrage bezüglich des Inhalts (CT) und der Liste der Anwendungsendpunkte (EPi), die Orte des Inhalts (CT) bezeichnen,
∘ einen Generator (GE) zum Erzeugen einer Verkehrsoptimierungsanfrage (TR), die die Liste der Anwendungsendpunkte (EPi) und eine Verkehrsoptimierungsdienstkennung (SI) aufweist,
∘ einen ersten Sender (TM1) zum Senden der erzeugten Verkehrsoptimierungsanfrage (TR) zu dem Anforderungsbearbeitungsdienst (RS) durch eine Anfrageverknüpfüng (RL) zwischen dem Anfragebearbeitungsclient (RC) und dem Anfragebearbeitungsdienst (RS) und
- der Anfragebearbeitungsdienst (RS) Folgendes aufweist:
∘ eine Rechenvorrichtung (CD), die zum Bearbeiten der Verkehrsoptimierungsanfrage (TR), die von dem Anfragebearbeitungsclient (RC) empfangen wird, angepasst ist, wobei das Bearbeiten die Verkehrsoptimierungsanfrage (TR) an eine Spezifikation eines Verkehrsoptimierungsagenten (TA) anpasst, der mit dem Verkehrsoptimierungsclient (TC) kooperiert,
∘ einen zweiten Sender (TM2) zum Senden der bearbeiteten Verkehrsoptimierungsanfrage (TR) zu dem Verkehrsoptimierungsagenten (TA), der mit dem Verkehrsoptimierungsclient (TC) kooperiert,
∘ einen zweiten Empfänger (RV2) zum Empfangen eines Ergebnisses der Bearbeitung der Verkehrsoptimierungsanfrage (TR) von dem Verkehrsoptimierungsagenten (TA), wobei das Ergebnis auf der Bearbeitung der Verkehrsoptimierungsanfrage (TR) gemäß der Verkehrsoptimierungsdienstkennung (SI) durch den Verkehrsoptimierungsagenten (TA) basiert,
und wobei ferner als Reaktion auf die Dienstanfrage bezüglich des Contents (CT):
∘ der zweite Sender (TM2) zum Senden des Ergebnisses der Bearbeitung der Verkehrsoptimierungsanfrage (TR) zum dem Verkehrsbearbeitungsclient (RC) durch die Anfrageverknüpfung (RL) konfiguriert ist, wobei das Ergebnis der Bearbeitung der Verkehrsoptimierungsanfrage (TR) eine rangierte Liste der Anwendungsendpunkte (EPi) basierend auf Transport- und/oder Kostenwerten, die durch den Verkehrsoptimierungsserver (TS) zurückgegeben werden, aufweist,
∘ der erste Empfänger (RV1) zum Empfangen des Ergebnisses der Bearbeitung der Verkehrsoptimierungsanfrage (TR) von dem Anfragebearbeitungsdienst (RS) durch die Anfrageverknüpfung (RL) konfiguriert ist, und
∘ der erste Sender (TM1) zum Bereitstellen des Ergebnisses der Bearbeitung der Verkehrsoptimierungsanfrage (TR) für die Anwendungsendpunktclientsammelfunktion (AFi) konfiguriert ist.

2. System nach Anspruch 1, wobei die Verkehrsoptimierungskennung (SI) einen Anwendungsendpunktrangierungsdienst oder einen Anwendungspfadrangierungsdienst oder einen Anwendungsendpunktauswertungsdienst kennzeichnet.

3. System nach einem der Ansprüche 1 und 2, wobei das System ferner eine Anfragebearbeitungsdatenbank (RD) aufweist, wobei die Anfragebearbeitungsdatenbank (RD) vorherige Verkehrsoptimierungsanfragen (TR), die von dem Anfragebearbeitungsdienst (RS) empfangen werden, und die vorherigen Ergebnisse der Verkehrsoptimierungsanfragen (TR), die von dem Verkehrsoptimierungsagenten (TA) empfangen werden, aufweist, und der Verkehrsoptimierungsagent (TA) angepasst ist, um die Anfragebearbeitungsdatenbank (RD) abzufragen, um eine mit der neu empfangenen Verkehrsoptimierungsanfrage (TR) übereinstimmende vorherige Anfrage zu finden.

4. System nach einem der Ansprüche 1 bis 3, wobei der Anfragebearbeitungsclient (RC) in der Anwendungsendpunktsammelfunktion (AFi) enthalten ist.

5. System nach einem der Ansprüche 1 bis 4, wobei die Anwendungsendpunktsammelfunktion (AFi) ein Anwendungsendpunktsammelfunktionsclient (AF1) ist, der in der Vorrichtung (UD) eines Benutzers enthalten ist.

6. System nach einem der Ansprüche 1 bis 4, wobei die Anwendungsendpunktsammelfunktion (AFi) ein Anwendungsendpunktsammelfunktionsserver (AF2) ist, der in einem Netzwerkelement (NE) von dem Kommunikationsnetzwerk (CN) enthalten ist.

7. System nach einem der Ansprüche 1 bis 6, wobei das Protokoll, das von dem Verkehrsoptimierungsserver (TS) und dem Verkehrsoptimierungsclient (TC) verwendet wird, das Anwendungsschichtverkehrsoptimierungs ("ALTO")-protokoll von der Internet Engineering Task Force ("IETF") ist, und wobei der Verkehrsoptimierungsserver (TS) ein "ALTO"-Server ist und der Verkehrsoptimierungsclient (TC) ein "ALTO"-Client ist.

8. System nach Anspruch 7, wobei der Anfragebearbeitungsclient (RC) ein Mehrfachzugriff- und -Kosten-ALTO-Anfrageclient ist und der Anfragebearbeitungsdienst (RS) ein Mehrfachzugriff- und -Kosten-ALTO-Anfragedienst ist, wobei der Mehrfachzugriff- und -Kosten-ALTO-Anfragedienst und die Anfragebearbeitungsdatenbank (RD) in dem Verkehrsoptimierungsfrontend (TF) enthalten sind, wobei das Verkehrsoptimierungsfrontend (TF) ein Mehrfachzugriff- und -Kosten-ALTO-Client ist, welcher ferner den ALTO-Client und den Verkehrsoptimierungsagenten (TA) als einen ALTO-Agenten aufweist.

9. System nach einem der Ansprüche 7 und 8, wobei die Verkehrsoptimierungsanfrage (TR), die von dem Anfragebearbeitungsdienst (RS) empfangen wird, ferner von einem Metrikauswahlmodul (MS) bearbeitet wird, das ALTO-Metriken auswählt, die mit den Merkmalen der Anwendungsendpunkte (EPi) von der Liste der Anwendungsendpunkte (EPi) und mit den Merkmalen der Verkehrsoptimierungsdienstkennung (SI) verknüpft sind.

10. System nach einem der Ansprüche 7 bis 9, wobei das Ergebnis der Verkehrsoptimierungsanfrage (TR), das von dem ALTO-Client empfangen wird, ferner von einem Mehrfachkriterienendpunktauswertungsmodul (EV) bearbeitet wird, das in dem Mehrfachzugriff- und -Kosten-ALTO-Client (TF) enthalten ist, wobei das Mehrfachkriterienendpunktauswertungsmodul (EV) angepasst ist, um die Endpunkte gemäß dem Ergebnis der Verkehrsoptimierungsanfrage (TR) zu rangieren oder auszuwerten.

11. Verfahren, das in einem Kommunikationsnetzwerk (CN) ausgeführt wird, das einen Verkehrsoptimierungsserver (TS) und einen Verkehrsoptimierungsclient (TC) aufweist, die miteinander kooperieren, um eine Dienstanfrage bezüglich des Inhalts (CT) von einer Anwendungsendpunktsammelfunktion (AFi) zu bearbeiten, wobei die Anwendungsendpunktsammelfunktion (AFi) angepasst ist, um eine Liste der Anwendungsendpunkte (EPi) zu erstellen, die Orte des Inhalts (CT) bezeichnen, und das Verfahren die folgenden Schritte umfasst, die als Reaktion auf die Dienstanfrage bezüglich des Inhalts (CT) von einem Anfragebearbeitungsclient (RC) und einem Anfragebearbeitungsdienst (RS), die sich von dem Verkehrsoptimierungsserver (TS) und dem Verkehrsoptimierungsclient (TC) des Kommunikationsnetzwerks (CN) unterscheiden und zusätzlich zu diesen vorliegen, durchgeführt werden:
- Empfangen (505) durch den Anfragebearbeitungsclient (RC) von der Anwendungsendpunktsammelfunktion (AFi) der Dienstanfrage bezüglich des Inhalts (CT) und einer Liste der Anwendungsendpunkte (EPi), die den Ort des Inhalts (CT) bezeichnen,
- Erzeugen (507) durch den Anfragebearbeitungsclient (RC) einer Verkehrsoptimierungsanfrage (TR), wobei die Verkehrsoptimierungsanfrage (TR) die Liste der Anwendungsendpunkte (EPi) und eine Verkehrsoptimierungsdienstkennung (SI) aufweist,
- Senden (509) durch den Anfragebearbeitungsclient (RC) zu einem Anfragebearbeitungsdienst (RS) der erzeugten Verkehrsoptimierungsanfrage (TR) durch eine Anfrageverknüpfung (RL) zwischen dem Anfragebearbeitungsclient (RC) und dem Anfragebearbeitungsdienst (RS),
- Bearbeiten (511) durch den Anfragebearbeitungsdienst (RS) der Verkehrsoptimierungsanfrage (TR), die von dem Anfragebearbeitungsclient (RC) empfangen wird, wobei das Bearbeiten die Verkehrsoptimierungsanfrage (TR) an eine Spezifikation eines Verkehrsoptimierungsagenten (TA), der mit dem Verkehrsoptimierungsclient (TC) kooperiert, anpasst,
- Senden (513) durch den Anfragebearbeitungsdienst (RS) der bearbeiteten Verkehrsoptimierungsanfrage (TR) zu einem Verkehrsoptimierungsagenten (TA), der mit einem Verkehrsoptimierungsclient (TC) kooperiert,
- Empfangen (531) durch den Anfragebearbeitungsdienst (RS) eines Ergebnisses der Bearbeitung der Verkehrsoptimierungsanfrage (TR) von dem Verkehrsoptimierungsagenten (TA), wobei das Ergebnis auf dem Bearbeiten der Verkehrsoptimierungsanfrage (TR) gemäß der Verkehrsoptimierungsdienstkennung (SI) durch den Verkehrsoptimierungsagenten (TA) basiert,
- Senden (533) durch den Anfragebearbeitungsdienst (RS) des Ergebnisses der Bearbeitung der Verkehrsoptimierungsanfrage (TR) zu dem Anfragebearbeitungsclient (RC) durch die Anfrageverknüpfung (RL), wobei das Ergebnis der Bearbeitung der Verkehrsoptimierungsanfrage (TR) eine rangierte Liste der Anwendungsendpunkte (EPi) basierend auf Transport- und/oder Kostenwerten, die von dem Verkehrsoptimierungsserver (TS) zurückgegeben werden, aufweist,
- Empfangen (533) durch den Anfragebearbeitungsclient (RC) von dem Anfragebearbeitungsdienst (RS) durch die Anfrageverknüpfung (RL) des Ergebnisses der Bearbeitung der Verkehrsoptimierungsanfrage (TR), und
- Bereitstellen (535) durch den Anfragebearbeitungsclient (RC) für die Anwendungsendpunktclientsammelfunktion (AFi) des Ergebnisses der Bearbeitung der Verkehrsoptimierungsanfrage (TR).

12. Verfahren nach Anspruch 11, wobei die Verkehrsoptimierungsanfrage (TR) ferner eine Verkehrsoptimierungsdienstkennung (SI) aufweist, wobei die Verkehrsoptimierungsdienstkennung (SI) einen Anwendungsendpunktrangierungsdienst oder einen Anwendungspfadrangierungsdienst oder einen Anwendungsendpunktauswertungsdienst kennzeichnet.

13. Verfahren nach einem der Ansprüche 11 und 12, wobei das Verfahren ferner folgende Schritte umfasst, die von einem Verkehrsoptimierungsagenten (TA) durchgeführt werden:
- Abfragen (515) der Anfragebearbeitungsdatenbank (RD), um eine mit der neu empfangenen Verkehrsoptimierungsanfrage (TR) übereinstimmende vorherige Verkehrsoptimierungsanfrage zu finden,
- wenn eine Übereinstimmung zwischen einer vorherigen Verkehrsoptimierungsanfrage und der neu empfangenen Verkehrsoptimierungsanfrage (TR) gefunden wird, Empfangen (517) des vorherigen Ergebnisses der Verkehrsoptimierungsanfrage von der Anfragebearbeitungsdatenbank (RD).

## Revendications

1. Système, destiné à un réseau de communication (CN) ayant un serveur d'optimisation de trafic (TS) et un client d'optimisation de trafic (TC) coopérant entre eux pour fournir un service d'optimisation de trafic, permettant de traiter une requête de service pour un contenu (CT) à partir d'une fonction de regroupement de points d'extrémité d'application (AFi), ladite fonction de regroupement de points d'extrémité d'application (AFi) étant conçue pour établir une liste de points d'extrémité (EPi) d'application désignant différents emplacements du contenu (CT) à l'intérieur du réseau de communication (CN), ledit système comportant un client de traitement de requête (RC) et un service de traitement de requête (RS) différents du serveur d'optimisation de trafic (TS) et du client d'optimisation de trafic (TC) et supplémentaires :
- le client de traitement de requête (RC) comprenant :
• un premier récepteur (RV1) destiné à recevoir à partir de la fonction de regroupement de points d'extrémité d'application (AFi), la requête de service pour le contenu (CT) et la liste de points d'extrémité (EPi) d'application désignant des emplacements de contenu (CT),
• un générateur (GE) destiné à générer une requête d'optimisation de trafic (TR) comportant la liste de points d'extrémité (EPi) d'application et un identifiant de service (SI) d'optimisation de trafic,
• un premier transmetteur (TM1) destiné à envoyer la requête d'optimisation de trafic (TR) générée au service de traitement de requête (RS) par l'intermédiaire d'une liaison de requête (RL) entre le client de traitement de requête (RC) et le service de traitement de requête (RS), et,
- le service de traitement de requête (RS) comprenant :
• un dispositif informatique (CD) conçu pour traiter la requête d'optimisation de trafic (TR) reçue à partir du client de traitement de requête (RC), ledit traitement adaptant ladite requête d'optimisation de trafic (TR) à une spécification d'un agent d'optimisation de trafic (TA) coopérant avec le client d'optimisation de trafic (TC),
• un deuxième transmetteur (TM2) destiné à envoyer la requête d'optimisation de trafic (TR) traitée à l'agent d'optimisation de trafic (TA) coopérant avec le client d'optimisation de trafic (TC),
• un deuxième récepteur (RV2) destiné à recevoir un résultat de traitement de la requête d'optimisation de trafic (TR) à partir de l'agent d'optimisation de trafic (TA), ledit résultat étant basé sur le traitement de la requête d'optimisation de trafic (TR) selon l'identifiant de service (SI) d'optimisation de trafic par l'agent d'optimisation de trafic (TA),
et, en outre, en réponse à la requête de service pour le contenu (CT) :
• le deuxième transmetteur (TM2) étant configuré pour envoyer le résultat du traitement de la requête d'optimisation de trafic (TR) au client de traitement de requête (RC), par l'intermédiaire de la liaison de requête (RL), ledit résultat du traitement de la requête d'optimisation de trafic (TR) comportant une liste de classement des points d'extrémité (EPi) d'application basée sur des valeurs de transport et/ou de coût retournées par le serveur d'optimisation de trafic (TS),
• le premier récepteur (RV1) étant configuré pour recevoir le résultat du traitement de la requête d'optimisation de trafic (TR) à partir du service de traitement de requête (RS) par l'intermédiaire de la liaison de requête (RL), et
• le premier transmetteur (TM1) étant configuré pour fournir le résultat du traitement de la requête d'optimisation de trafic (TR) à la fonction de regroupement de clients de point d'extrémité d'application (AFi).

2. Système selon la revendication 1, dans lequel l'identifiant (SI) d'optimisation de trafic identifie un service de classement de points d'extrémité d'application, ou un service de classement de chemins d'application, ou un service d'évaluation de points d'extrémité d'application.

3. Système selon l'une quelconque des revendications 1 et 2, dans lequel le système comprend en outre une base de données de traitement de requête (RD), ladite base de données de traitement de requête (RD) comportant des requêtes d'optimisation de trafic (TR) précédentes reçues par le service de traitement de requête (RS) et les précédents résultats des requêtes d'optimisation de trafic (TR) reçues par l'agent d'optimisation de trafic (TA), et ledit agent d'optimisation de trafic (TA) étant conçu pour interroger la base de données de traitement de requête (RD) afin de trouver une requête précédente équivalente à la requête d'optimisation de trafic (TR) nouvellement reçue.

4. Système selon l'une quelconque des revendications 1 à 3, dans lequel le client de traitement de requête (RC) est compris dans la fonction de regroupement de points d'extrémité d'application (AFi).

5. Système selon l'une quelconque des revendications 1 à 4, dans lequel la fonction de regroupement de points d'extrémité d'application (AFi) est un client de fonction de regroupement de points d'extrémité d'application (AF1) compris dans un dispositif d'utilisateur (UD).

6. Système selon l'une quelconque des revendications 1 à 4, dans lequel la fonction de regroupement de points d'extrémité d'application (AFi) est un serveur de fonction de regroupement de points d'extrémité d'application (AF2) compris dans un élément réseau (NE) du réseau de communication (CN).

7. Système selon l'une quelconque des revendications 1 à 6, dans lequel le protocole utilisé par le serveur d'optimisation de trafic (TS) et le client d'optimisation de trafic (TC) est le protocole d'optimisation de trafic de couche d'application "ALTO" de l'IETF (Internet engineering task force), et le serveur d'optimisation de trafic (TS) étant un serveur ALTO et le client d'optimisation de trafic (TC) étant un client ALTO.

8. Système selon la revendication 7, dans lequel le client de traitement de requête (RC) est un client de requête ALTO multi-accès et multi-coût et le service de traitement de requête (RS) est un service de requête ALTO multi-accès et multi-coût, ledit service de requête ALTO multi-accès et multi-coût et la base de données de traitement de requête (RD) étant compris dans le frontal d'optimisation de trafic (TF), ledit frontal d'optimisation de trafic (TF) étant un client ALTO multi-accès et multi-coût, qui comporte en outre le client ALTO et l'agent d'optimisation de trafic (TA) comme un agent ALTO.

9. Système selon l'une quelconque des revendications 7 et 8, dans lequel la requête d'optimisation de trafic (TR) reçue par le service de traitement de requête (RS) est en outre traitée par un module de sélection de mesure (MS) qui sélectionne des mesures ALTO relatives aux caractéristiques des points d'extrémité (EPi) d'application à partir de la liste de points d'extrémité (EPi) d'application et aux caractéristiques de l'identifiant de service (SI) d'optimisation de trafic.

10. Système selon l'une quelconque des revendications 7 à 9, dans lequel le résultat de la requête d'optimisation de trafic (TR) reçue par le client ALTO est en outre traité par un module d'évaluation de point d'extrémité multi critères (EV) compris dans le client ALTO multi-accès et multi-coût (TF), ledit module d'évaluation de point d'extrémité multi critères (EV) étant conçu pour classifier ou évaluer les points d'extrémité selon le résultat de la requête d'optimisation de trafic (TR).

11. Procédé, exécuté dans un réseau de communication (CN) ayant un serveur d'optimisation de trafic (TS) et un client d'optimisation de trafic (TC) coopérant entre eux, permettant de traiter une requête de service pour un contenu (CT), à partir d'une fonction de regroupement de points d'extrémité d'application (AFi), ladite fonction de regroupement de points d'extrémité d'application (AFi) étant conçue pour établir une liste de points d'extrémité (EPi) d'application désignant des emplacements du contenu (CT), et ledit procédé comprenant les étapes suivantes effectuées, en réponse à la requête de service pour un contenu (CT), par un client de traitement de requête (RC) et un service de traitement de requête (RS) différents du serveur d'optimisation de trafic (TS) et du client d'optimisation de trafic (TC) dudit réseau de communication (CN) et supplémentaires :
- recevoir (505), par le client de traitement de requête (RC), à partir de la fonction de regroupement de points d'extrémité d'application (AFi), la requête de service pour un contenu (CT) et un liste de points d'extrémité (EPi) d'application désignant un emplacement de contenu (CT),
- générer (507), par le client de traitement de requête (RC), une requête d'optimisation de trafic (TR), ladite requête d'optimisation de trafic (TR) comportant la liste de points d'extrémité (EPi) d'application et un identifiant de service (SI) d'optimisation de trafic,
- envoyer (509), par le client de traitement de requête (RC), à un service de traitement de requête (RS) la requête d'optimisation de trafic (TR) générée par l'intermédiaire d'une liaison de requête (RL) entre le client de traitement de requête (RC) et le service de traitement de requête (RS),
- traiter (511), par le service de traitement de requête (RS), la requête d'optimisation de trafic (TR) reçue à partir du client de traitement de requête (RC), ledit traitement adaptant ladite requête d'optimisation de trafic (TR) à une spécification d'un agent d'optimisation de trafic (TA) coopérant avec le client d'optimisation de trafic (TC),
- envoyer (513), par le service de traitement de requête (RS), la requête d'optimisation de trafic (TR) traitée à un agent d'optimisation de trafic (TA) coopérant avec un client d'optimisation de trafic (TC),
- recevoir (531), par le service de traitement de requête (RS), un résultat du traitement de la requête d'optimisation de trafic (TR) à partir de l'agent d'optimisation de trafic (TA), ledit résultat étant basé sur le traitement de la requête d'optimisation de trafic (TR) selon l'identifiant de service (SI) d'optimisation de trafic par l'agent d'optimisation de trafic (TA),
- envoyer (533), par le service de traitement de requête (RS), le résultat du traitement de la requête d'optimisation de trafic (TR) au client de traitement de requête (RC), par l'intermédiaire de la liaison de requête (RL), ledit résultat du traitement de la requête d'optimisation de trafic (TR) comportant une liste de classement des points d'extrémité (EPi) d'application basée sur des valeurs de transport et/ou de coût retournées par le serveur d'optimisation de trafic (TS),
- recevoir (533), par le client de traitement de requête (RC), à partir du service de traitement de requête (RS) par l'intermédiaire de la liaison de requête (RL), le résultat du traitement de la requête d'optimisation de trafic (TR), et
- fournir (535), par le client de traitement de requête (RC), à la fonction de regroupement de clients de point d'extrémité d'application (AFi), le résultat du traitement de la requête d'optimisation de trafic (TR).

12. Procédé selon la revendication 11, dans lequel la requête d'optimisation de trafic (TR) comprend en outre un identifiant de service (SI) d'optimisation de trafic, ledit identifiant de service (SI) d'optimisation de trafic identifiant un service de classement de points d'extrémité d'application, ou un service de classement de chemins d'application, ou un service d'évaluation de points d'extrémité d'application.

13. Procédé selon l'une quelconque des revendications 11 et 12, dans lequel ledit procédé comprend en outre les étapes suivantes exécutées par un agent d'optimisation de trafic (TA) :
- interroger (515) la base de données de traitement de requête (RD) afin de trouver une requête d'optimisation de trafic précédente équivalente à la requête d'optimisation de trafic (TR) nouvellement reçue,
- si une concordance entre une requête d'optimisation de trafic précédente et la requête d'optimisation de trafic (TR) nouvellement reçue est trouvée, recevoir (517) le résultat précédent de la requête d'optimisation de trafic à partir de la base de données de traitement de requête (RD).
